Europäisches Patentamt

European Patent Office

Office européen des brevets

(11) Publication number: **0 358 807**
**A1**

## EUROPEAN PATENT APPLICATION

(21) Application number: 88115142.7

(51) Int. Cl.5: **E06B 3/66**

(22) Date of filing: **15.09.88**

(43) Date of publication of application:
**21.03.90 Bulletin 90/12**

(84) Designated Contracting States:
**CH DE ES FR GB IT LI SE**

(71) Applicant: **Mecca, John**
**110 Whittier Drive**
**San Remo New York 11754(US)**

(72) Inventor: **Mecca, John**
**110 Whittier Drive**
**San Remo New York 11754(US)**

(74) Representative: **Schüler, Horst, Dr.**
**Kaiserstrasse 69**
**D-6000 Frankfurt/Main 1(DE)**

(54) **Variable blind.**

(57) In a window, a variable blind consisting of two sheets (1) of transparent material in which a colloidal solution (6) fills the space between the transparent sheets and a reservoir (7) for the solution located in the frame surrounding the sheets. The frame material is flexible so that squeezing the sheets closer together transfers liquid into the reservoir. The spacing of the two sheets determines the transparency of the window.

FIG. 2

## VARIABLE BLIND

### Background of Invention

This invention relates to the imposition of opaque substances within a window frame to selectively block or allow passage of solar rays.

Numerous proposals to block the suns rays have been developed using opaque materials such as sheets of plastic and metal, where they are placed in front of the window aperture and drawn away from the line of sight, to fold or roll up.

A need to alternately have a window opaque, and then transparent has been considered imperative where shielding from all electromagnetic spectrum components when it has been inconvenient or infeasable due to constraints in use of space, or placement overhead.

### Summary of Invention

The present invention takes advantage of colloidal liquids that contain sufficient particulate to appear transparent at thicknesses of one thousandths of an inch, and completely opaque at thicknesses of twenty thousandths of an inch. This liquid being entrained between two transparent sheets of glass, or plastic that have a space between them or twenty thousandths of an inch; being maintained at that maximum distance from each other equally by an elastic frame of silicone. This colloidal liquid entrained between the transparent sheets has a set of compression clamps at strategic points around the perimeter of the sheets to compress the transparent sheets together, thereby reducing the space between them from twenty thousandths down to five thousandths of an inch allowing light to transverse the diminished thickness of liquid using lead or carbon collodials, etc.

It is therefore an object of the present invention to utilize a colloidal liquid's relative thickness to act in place of a mechanical blind obstructor sheet.

It is another object to allow partial blockage of solar spectrum transmission.

It is another object to eliminate the bulk of activating mechanisms.

It is another object to selectively stop various wavelengths of the electromagnetic spectrum, by selecting the proper colloidal particulate elements.

It is another object to provide insulation from heat, light, electrical interference, infared, ultraviolet rays from penetration wholly or in part.

The novel features which are believed to be characteristic of the invention, both to its organization and method of facilitating screening together with further objectives and advantages thereof will be better understood from the following description considered in connection with the accompanying drawings in which presently preferred embodiments of the invention are illustrated by way of example. It is to be expressly understood that the drawings are for the purpose of illustration and description only, and are not intended as a definition of the limits of the invention.

### BRIEF DESCRIPTION OF THE DRAWINGS

Fig. 1 is a front view as one would look through a window; around the rectangular sheet is an elastic molding, at intervals there are cam clamps to compress the collodial liquid from between the sheet panes.

Fig. 2 is an edge wise view sectional cutaway where the two panes in relation to each other create between them a space for entrainment of the colloidal liquid of appropriate makeup to block radiation, an elastic moulding edge holding the panes together at their perimeter has moulded within it a space used as a reservoir for collodial liquid to escape into during compression by the cam clamp's actuation.

Fig. 3 is a detail of a view similar to Fig. 2 showing a modification.

### DETAILED DESCRIPTION OF THE PRESENTLY PREFERRED EMBODIMENT

The precise shape and sizes of the components described are not essential to the invention unless otherwise indicated.

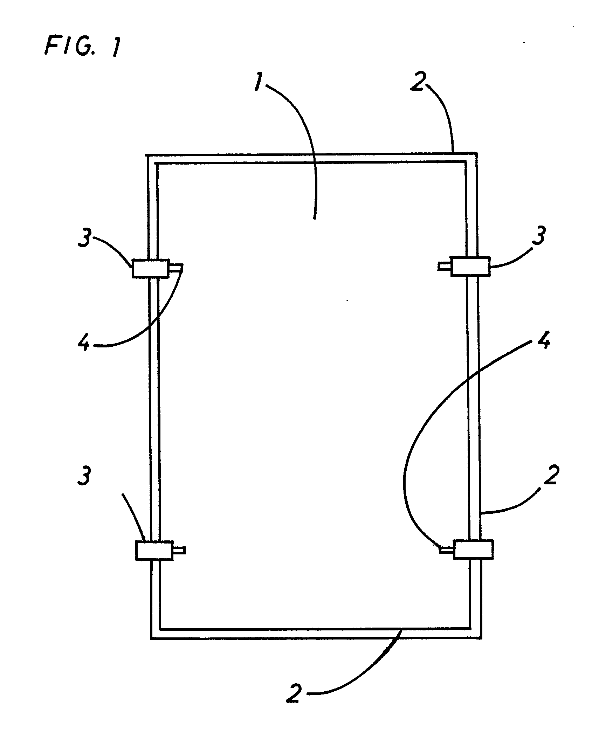

Fig. 1 shows rectangular transparent sheet 1 surrounded at its perimeter by elastic moulding of silicone 2, at intervals around the perimeter there are cam actuated clamps 3 with their cam handles 4.

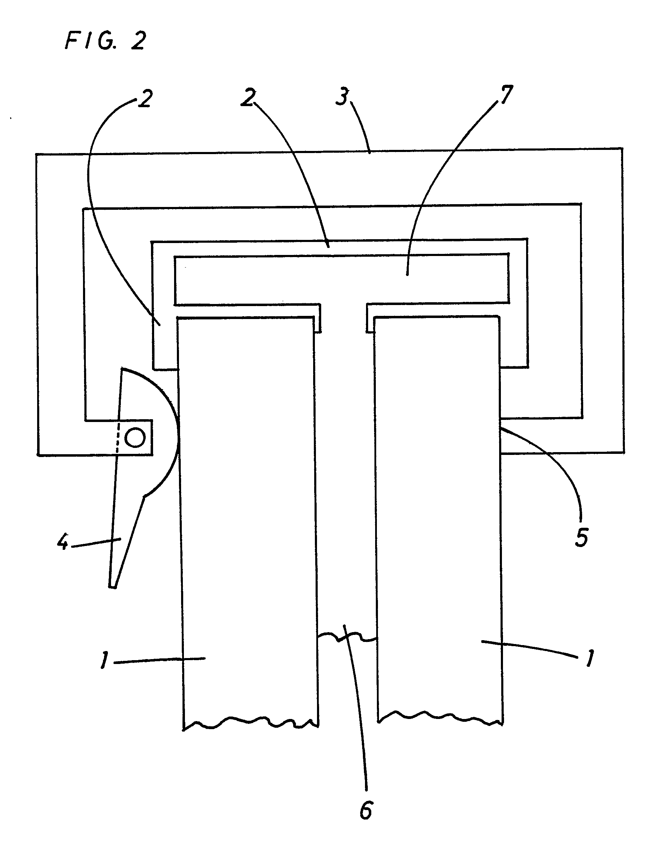

Fig. 2 shows transparent panes 1 held apart by elastic silicone moulding edge 2. Within the elastic moulding is moulded a reservoir channel 7 extending its entire circumference; wrapped around the edge of panes 1 is clamp 3 which rests stationarily upon the pane 1 at glued point 5, its other end terminates on the opposing pane at lever cam actuated compressor 4. Between the panes 1 is the colloidal liquid 6 of appropriate composition.

In the operation of the apparatus just described, the spacing between panes 1 can be changed by the rotation of cam actuated compressor 4. The liquid from reservoir channel 7 fills the space between panes 1. Hence, by increasing the space between panes 1 there is increasing opaqueness and more attenuation of the radiation. By actuating compressor 4 to decrease the space between panes, there is less attenuation of the radiation passing through panes 1. Moulding 2 is made of an elastic material and is able to absorb in reservoir 7 the flow of colloidal liquid out of the space between panes 1 when they are compressed together.

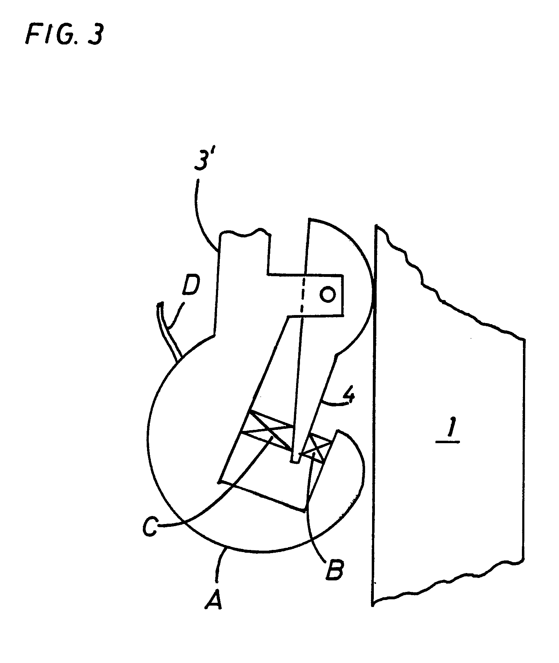

Referring to Fig. 3, there is shown an alternative embodiment providing for the remote actuation of compressors 4. There is shown clamp 3 with an extension A supporting a pair of actuators B and C to effect the remote actuation of compressor. Actuators B and C may be pneumatic, hydraulic, or electrical such as solenoids of conventional design. Line D would carry the necessary source of power, i.e., air under pressure, hydraulic fluid, or electricity.

## Claims

1. A variably transparent window consisting of a pair of spaced sheets (1) of transparent material comprising:

   a. a moulding edge (2) mounted along the perimeter of said window sealing the space between said spaced sheets (1) and forming a reservoir (7) communicating with said space;

   b. a liquid (6) filling the space between said spaced sheets (1) and said reservoir (7), the transparency of said liquid (6) being a function of and changing substantially with the thickness of the layer of said liquid (6) between said sheets (1) so that the transparency of said liquid (6) sandwiched between said sheets (1) increases as said thickness descreases; and

   c. apparatus (4) for reducing the spacing between said sheets (1) thereby increasing the transparency of said window.

2. The window of claim 1 in which said moulding edge (2) is made of an elastic material whereby said reservoir (7) is able to accomodate liquid (6) displaced from the space between said sheets (1) when the latter are brought closer together by said apparatus (4).

3. The window of claim 1 in which said apparatus (4) comprises a plurality of clamps (3) spaced along the perimeter of said window for adjustably compressing said sheets (1) against said liquid (6) filling the space between said sheets (1) to effect the spacing between said sheets (1).

4. The invention of claim 1 in which said liquid (6) contains a particulate in colloidal suspension.

5. The invention of claim 1 in which apparatus (4) includes provision for its remote actuation.

6. The method of changing the transparency of a window consisting of a pair of parallel, spaced sheets (1) of transparent material, a moulding edge (2) mounted along the perimeter of said window sealing the space between said spaced sheets (1) and forming a reservoir (7) comunicating with said space, and a liquid (6) filling the space between said spaced sheets (1) and said reservoir (7), the transparency of said liquid (6) being a function of and changing substantially the thickness of the layer of said liquid (6) between said sheets (1), said method comprising the steps of compressing said sheets (1) towards each other to reduce the thickness of the layer of said liquid (6) between said sheets (1) in order to increase the transparency of said window.

7. The method of claim 6 wherein said liquid (6) contains a particulate in colloidal suspension.

8. The method of claim 6 wherein said mounted moulding edge (2) is made of an elastic material whereby said reservoir (7) is able to accomodate liquid (6) displaced from the space between said sheets (1) when said sheets (1) are compressed against each other.

9. The method of claim 6 wherein said compressing is effected remotely.

10. The method of changing the transparency of a window comprising a pair of spaced sheets (1) of transparent material filled with a liquid (6) containing a particualte in colloidal solution, the method comprising the steps of reducing the spacing between said sheets (1) in order to reduce the thickness of the layer of said liquid therebetween to increase the transparency of said layer of liquid (6), and absorbing liquid displaced from said spacing in a reservoir (7) formed from a flexible material.

FIG. 1

FIG. 2

EP 0 358 807 A1

FIG. 3

3'

D

4

C

B

A

1

European Patent Office

**EUROPEAN SEARCH REPORT**

Application number

EP 88 11 5142

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| X | GB-A-1 145 060 (TILLO FAULHABER)<br>* Whole document * | 1,2,6,8 | E 06 B 3/66 |
| A | FR-A-2 442 329 (TEPLITSKY)<br>* Whole document * | 1,2,6,8 | |

**TECHNICAL FIELDS SEARCHED (Int. Cl.4)**

E 06 B

| Place of search | Date of completion of the search | Examiner |
|---|---|---|
| THE HAGUE | 10-05-1989 | VAN GESTEL |

European Patent .
Office

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid.

namely claims:

☐ No claims fees have been paid within the prescribed time limit. The present European search report has been drawn up for the first ten claims.

## X | LACK OF UNITY OF INVENTION

The Search Division considers that the present European patent application does not comply with the requirement of unity of invention and relates to several inventions or groups of inventions.

namely:

1. Claims 2,8,10 and 1,6 partially:
   Variable transparant window with moulding edge made of elastic material

2. Claims 3 and 1,6 partially:
   Variable transparant window with clamps for compressing the sheets against the filling liquid

3. Claims 4,7 and 1,6 partially:
   Variable transparant window filled with a liquid containing particulate in colloid suspension

4. Claims 5,9 and 1,6 partially:
   Variable transparant window with provision for remote actuation

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid.

namely claims:

☒ None of the further search fees has been paid within the fixed time limit. The present European search report has been drawn up for those parts of the European patent application which relate to the invention first mentioned in the claims.

namely claims: 2,8,10 and 1,6 partially